# EUROPÄISCHE PATENTSCHRIFT

(11) **EP 2 700 670 B1**
(45) Veröffentlichungstag und Bekanntmachung des Hinweises auf die Patenterteilung: **09.12.2015**
(21) Anmeldenummer: 13174451.8
(22) Anmeldetag: 01.07.2013
(51) Int. Cl.: C08L 9/00, C08L 21/00, C08L 7/00, C08K 3/22, C08L 9/06, B60C 1/00, C08K 5/00

(54) **Kautschukmischung**
Rubber compound
Mélange de caoutchouc

(30) Priorität: 20.08.2012 DE 102012107607
(43) Veröffentlichungstag der Anmeldung: 26.02.2014
(73) Patentinhaber: Continental Reifen Deutschland GmbH, 30165 Hannover (DE)
(72) Erfinder: Recker, Carla, Dr., 30167 Hannover (DE); Jungk, Juliane, 30163 Hannover (DE); Große, Julia, 30926 Seelze (DE)
(74) Vertreter: Preusser, Andrea

(56) Entgegenhaltungen:
- EP-A1- 1 767 569
- EP-A1- 2 093 078
- EP-A1- 2 298 523
- EP-A2- 2 014 711

## Beschreibung

Die Erfindung betrifft eine Kautschukmischung, insbesondere für Laufstreifen von Reifen.

Bei der Vulkanisation von schwefelvemetzbaren Kautschukmischungen ist es üblich, als Aktivator Zinkoxid (ZnO) einzusetzen. Durch Komplexbildung mit dem Schwefel wird dieser für die Vulkanisation aktiviert und somit eine ausreichende Vernetzung erzielt.

Zinkverbindungen in Kautschukmischungen sind jedoch in Diskussion geraten, da es sich bei Zink um ein Schwermetall handelt, welches Potenzial zur Schädigung der aquatischen Umwelt besitzt. Es wird davon ausgegangen, dass insbesondere durch Abrieb von Reifen insbesondere aus dem Laufstreifen größere Mengen an Zink in die Umwelt gelangen. Außerdem verursachen hohe Mengen an Zink in der Kautschukmischung ein Problem bei der Reifenfertigung, da sich bei der Vulkanisation Zinksulfid bildet, welches sich an den Entlüftungsventilen der Reifenformen ablagert und zu blockierten Entlüftungsventilen führen kann. Dies führt dann zu so genannten Schwindstellen im Reifen durch eingeschlossene Luftblasen.

Aufgrund der vorgenannten Probleme ist man bestrebt, den Anteil an Zinkverbindungen in Kautschukmischungen für Reifen weiter zu reduzieren.

Aus der DE 102009059207 A1 ist hierzu beispielsweise eine Zinkoxidfreie schwefelvemetzbare Kautschukmischung, insbesondere für Laufstreifen von Reifen, bekannt, die 0 phr ZnO und 1 phr des Dithiocarbamatbeschleunigers ZBEC (Zinkdibenzyldithiocarbamat) enthält. Sie weist eine vergleichsweise geringe Härte auf. Die Auswirkungen auf die Abriebbeständigkeit sind hieraus nicht bekannt. Aus den Indikatoren Rückprallelastizität bei 70 °C sowie tan δ bei 55 und 100 °C ist zu entnehmen, dass die Mischung ein verbessertes Gripniveau bei erhöhtem Rollwiderstand aufweist.

In der DE 102009003720 A1 wird eine Kautschukmischung mit einem geringen Zinkgehalt beschrieben, welche 0,005 bis 2 phr zumindest eines funktionalisierten Übergangsmetalloxids und/oder -sulfids mit einer Partikelgröße von weniger als 100 nm und 0,5 bis 6 phr Magnesiumoxid enthält. In den Beispielen werden mit 1 phr funktionalisiertem nanoskaligem Zinkoxid und 2 phr Magnesiumoxid gute Abriebeigenschaften erzielt.

Die WO 00/37267 A1 offenbart eine Kautschukmischung, die 1 phr ZnO und 2,4 bis 3 phr eines Sulfenamidbeschleunigers und/oder Thiazolbeschleunigers sowie 1 phr Schwefel enthält und gute Abriebeigenschaften aufweist.

Die EP 1773938 B1 offenbart eine bis zu 0,5 phr Zink enthaltende Kautschukmischung, in der durch die Kombination eines monofunktionellen Silans mit einem reduzierten RußGehalt die mit der Reduzierung der Zinkoxid-Menge einhergehende Heizzeitverkürzung ausgeglichen wird.

In der DE 102005050764 A1 wird eine Kautschukmischung beschrieben, welche für einen reduzierten Zinkgehalt ohne Einbußen in den Vulkanisateigenschaften hochaktive Zinkoxid in Kombination mit einem Prozesshilfsmittel, welches aus Natrium- und/oder Kaliumseifen sowie Glycerinestern von C₁₀ bis C₂₈-Carbonsäuren enthält. Der Einfluss auf den Abrieb wurde nicht untersucht.

Die EP 1505115 A1 offenbart eine Kautschukmischung mit 0,05 bis 5 phr Zinkoxid-Partikel mit einem Durchmesser kleiner als 20 nm und einem Vemetzungssystem, bei dem das molare Verhältnis (Molverhältnis) Beschleuniger/Schwefel zwischen 1 und 1,9 beträgt. Welchen Einfluss eine derartige Kautschukmischung auf die physikalischen Eigenschaften, insbesondere auf das Abriebverhalten, hat, ist aus dieser Schrift nicht erkennbar.

Der Erfindung liegt nun die Aufgabe zugrunde, den Zinkgehalt in schwefelvernetzbaren Kautschukmischungen zu reduzieren, ohne dass Einbußen in den für Reifen relevanten Vulkanisateigenschaften, insbesondere dem Abrieb, hingenommen werden müssen. Des Weiteren sollen die ökonomischen Eigenschaften von Reifen, insbesondere die Herstellungskosten nicht steigen.

Gelöst wird die Aufgabe erfindungsgemäß durch eine Kautschukmischung enthaltend:
- wenigstens einen Dienkautschuk und
- 0 bis 1,2 phr Zinkoxid und
- ein Vulkanisationssystem, das wenigstens einen Beschleuniger und elementaren Schwefel und/oder wenigstens eine schwefelspendende Substanz enthält, wobei das Molverhältnis von Beschleuniger zu Schwefel 0,9 bis 5 beträgt, wobei die Gesamtmolmenge Schwefel aus elementarem Schwefel und dem von den schwefelspendenden Substanzen abgegebenem Schwefel besteht.

Die in dieser Schrift verwendete Angabe phr (Parts per hundred Parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Überraschenderweise weist die erfindungsgemäße Kautschukmischung sehr gute Vulkanisateigenschaften, insbesondere sehr gute Abriebeigenschaften auf.

Durch die Kombination des reduzierten Zinkgehalts mit dem Vulkanisationssystem ergeben sich in der Kautschukmischung zusätzlich ökologische Vorteile und die Reifenproduktion wird durch Sulfidablagerungen in den Lüftungsventilen der Reifenformen deutlich weniger behindert.

Des Weiteren ermöglichen die verkürzten Heizzeiten Kostenersparnisse sowie eine ökonomisch sinnvolle Verarbeitung der erfindungsgemäßen Kautschukmischung.

Die erfindungsgemäße Kautschukmischung enthält 0 bis 1,2 phr ZnO. Dabei kommen alle dem Fachmann bekannten Zinkoxid-Typen in Frage. So kann das eingesetzte ZnO z.B. als Pulver oder Granulat vorliegen. Es kann sich des Weiteren auch um nanoskaliges Zinkoxid handeln.

Die erfindungsgemäße Kautschukmischung enthält zumindest einen Dienkautschuk. Die Dienkautschuke können im Verschnitt eingesetzt werden. Zu den Dienkautschuken zählen alle Kautschuke mit einer ungesättigten Kohlenstoffkette, die sich zumindest teilweise von konjugierten Dienen ableiten.
Einsetzbare Dienkautschuke sind beispielsweise natürliches Polyisopren (NR), synthetisches Polyisopren (IR), Polybutadien (BR), Styrol-Butadien-Copolymer (SBR), Styrol-Isopren-Butadien-Terpolymer, Butylkautschuk, Halobutylkautschuk, Ethylen-Propylen-Dien-Kautschuk (EPDM) oder modifizierte Dienkautschuke. Bei der Modifizierung kann es sich um solche mit Hydroxyl-Gruppen und/oder Ethoxy-Gruppen und/oder Epoxy-Gruppen und/oder Siloxan-Gruppen und/oder Amino-Gruppen und/oder Aminosiloxan und/oder Carboxyl-Gruppen und/oder Phthalocyanin-Gruppen handeln. Es kommen aber auch weitere, der fachkundigen Person bekannte, Modifizierungen, auch als Funktionalisierungen bezeichnet, in Frage. Bestandteil solcher Funktionalisierungen können auch Metallatome sein.

Bevorzugt ist der Dienkautschuk ausgewählt aus der Gruppe bestehend aus natürlichem und/oder synthetischem Polyisopren und/oder Polybutadien und/oder Styrol-Butadien-Kautschuk.

Die Mengen an natürlichem und/oder synthetischem Polyisopren in der erfindungsgemäßen Kautschukmischung betragen 5 bis 100 phr.

Bei dem Styrol-Butadien-Copolymer kann es sich um lösungspolymerisiertes Styrol-Butadien-Copolymer (S-SBR) mit einem Styrolgehalt, bezogen auf das Polymer, von 5 bis 45 Gew.-% und einem Vinylgehalt (Gehalt an 1,2-gebundenem Butadien, bezogen auf das gesamte Polymer) von 5 bis 70 Gew.-% handeln, welches zum Beispiel unter Verwendung von Lithiumalkylen in organischem Lösungsmittel hergestellt werden kann. Die S-SBR können auch gekoppelt und/oder endgruppenmodifiziert und/oder entlang der Kohlenstoffkette modifiziert (engl. backbone modified) sein. Bei der Modifizierung kann es sich um die oben beschriebenen Gruppen und Funktionalisierungen handeln.
Es können aber auch emulsionspolymerisiertes Styrol-Butadien-Copolymer (E-SBR) sowie Mischungen aus E-SBR und S-SBR eingesetzt werden. Der Styrolgehalt des E-SBR beträgt ca. 15 bis 50 Gew.-% und es können die aus dem Stand der Technik bekannten Typen, die durch Copolymerisation von Styrol und 1,3-Butadien in wässriger Emulsion erhalten wurden, verwendet werden.

Die Mengen an Styrol-Butadien-Kautschuk in der erfindungsgemäßen Kautschukmischung betragen 0 bis 100, bevorzugt 10 bis 100, besonders bevorzugt 10 bis 80 phr.

Bei dem Polybutadien (=Butadienkautschuk, BR) kann es sich um alle dem Fachmann bekannten Typen handeln. Darunter fallen u.a. die sogenannten high-cis- und low-cis-Typen, wobei Polybutadien mit einem cis-Anteil größer oder gleich 90 Gew.-% als high-cis-Typ und Polybutadien mit einem cis-Anteil kleiner als 90 Gew.-% als low-cis-Typ bezeichnet wird. Ein low-cis-Polybutadien ist z.B. Li-BR (Lithium-katalysierter Butadienkautschuk) mit einem cis-Anteil von 20 bis 50 Gew.-%. Ein high-cis-Polybutadien ist z.B. Nd-BR (Neodym-katalysierter Butadienkautschuk). Mit Nd-BR werden besonders gute Abriebeigenschaften der Kautschukmischung erzielt.
Das eingesetzte Polybutadien kann endgruppenmodifiziert sein. Bei der Modifizierung kann es sich um die oben beschriebenen Gruppen und Funktionalisierungen handeln.

Die Mengen an Butadienkautschuk betragen 0 bis 100, bevorzugt 0 bis 60, besonders bevorzugt 10 bis 60 phr.

Im Folgenden werden bevorzugte Ausführungsformen der Erfindung mit Variationen in der Polymer-Zusammensetzung beschrieben. Bei allen Ausführungsformen muss die Gesamtmenge aller Kautschuke immer 100 phr betragen.

Gemäß einer bevorzugten Weiterbildung der Erfindung enthält die Kautschukmischung 5 bis 15 phr eines natürlichen und/oder synthetischen Polyisoprens und 10 bis 25 phr eines Polybutadien-Kautschuks und 65 bis 80 phr eines Styrol-Butadien-Kautschuks und 0 phr ZnO. Eine solche Kautschukmischung ist frei von ZnO und zeigt besonders vorteilhafte Abriebeigenschaften in PKW-Laufstreifen.

In einer weiteren bevorzugten Ausführungsform der Erfindung enthält die Kautschukmischung 80 bis 100 phr eines natürlichen und/oder synthetischen Polyisoprens und bis zu 20 phr eines Polybutadien-Kautschuks und bis zu 10 phr eines Styrol-Butadien-Kautschuks und 0,8 bis 1,2 phr ZnO, bevorzugt 0,9 bis 1,1 phr ZnO, besonders bevorzugt 0,95 bis 1,05 phr ZnO. Eine solche Kautschukmischung zeigt besonders vorteilhafte Weiterreißeigenschaften in LKW-Laufstreifen, was die dem Fachmann bekannte "Chip&Chunk-Performance" des Reifens verbessert. Zudem ermöglicht eine solche Mischung eine Verringerung des Rollwiderstandes und des Abriebs eines LKW-Reifens.

In einer dritten bevorzugten Ausführungsform der Erfindung enthält die Kautschukmischung 100 phr eines natürlichen und/oder synthetischen Polyisoprens und 0,8 bis 1,2 phr ZnO, bevorzugt 0,9 bis 1,1 phr ZnO, besonders bevorzugt 0,95 bis 1,05 phr ZnO. Im Laufstreifen eines LKW-Reifens ist eine solche Mischung für die Chip&Chunk- und das Rollwiderstandsverhalten vorteilhaft. Weniger als 0,9 phr oder mehr als 1,2 phr ZnO führen in Kombination mit 100 phr eines natürlichen und/oder synthetischen Polyisoprens zu einer Verschlechterung der Abriebresistenz.

In einer vierten bevorzugten Ausführungsform der Erfindung enthält die Kautschukmischung 20 bis 80 phr eines natürlichen und/oder synthetischen Polyisoprens und 10 bis 60 phr eines Styrol-Butadien-Kautschuks und/oder 10 bis 60 phr eines Polybutadien-Kautschuks und 0,4 bis 1,2 phr ZnO, bevorzugt 0,9 bis 1,1 phr ZnO, besonders bevorzugt 0,95 bis 1,05 phr ZnO. Eine solche Kautschukmischung weist sehr gute Abriebeigenschaften, gute Rollwiderstandindikatoren und ökonomisch günstige Heizzeiten auf.

In einer fünften bevorzugten Ausführungsform der Erfindung enthält die Kautschukmischung 20 bis 80 phr eines natürlichen und/oder synthetischen Polyisoprens und 20 bis 60 phr eines Styrol-Butadien-Kautschuks oder 20 bis 60 phr eines Polybutadien-Kautschuks und 0,4 bis 1,2 phr ZnO, bevorzugt 0,4 bis 0,8 phr ZnO, besonders bevorzugt 0,45 bis 0,55 phr ZnO Eine solche Kautschukmischung weist exzellente Abriebeigenschaften und gleichzeitig ökonomisch sehr günstige Heizzeiten auf.

Die erfindungsgemäße Kautschukmischung enthält weiterhin ein Vulkanisationssystem, das wenigstens einen Beschleuniger und elementaren Schwefel und/oder wenigstens eine schwefelspendende Substanz enthält, wobei das Molverhältnis von Beschleuniger zu Schwefel (Beschleuniger/Schwefel-Verhältnis) 0,9 bis 5, bevorzugt 1,0 bis 2, beträgt. Ein derartiges Vulkanisationssystem wird auch als effizientes Vulkanisationssystem bezeichnet. Hierbei ist die molare Menge an Beschleuniger gegenüber der Menge an Schwefel vergleichsweise hoch und es bilden sich bei der Vernetzung überwiegend monosulfidische Schwefelbrücken zwischen den Polymerketten aus.

Der Beschleuniger ist ausgewählt aus der Gruppe bestehend aus Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Guanidinbeschleunigern und/oder Xanthogenatbeschleunigern.
Bevorzugt ist die Verwendung wenigstens eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert.Butyl-2-benzothiazylsulfenamid (TBBS).

Auch weitere netzwerkbildende Systeme, wie sie beispielsweise unter den Handelsnamen Vulkuren^{®}, Duralink^{®} oder Perkalink^{®} erhältlich sind, oder netzwerkbildende Systeme, wie sie in der WO 2010/049261 A2 beschrieben sind, können in der Kautschukmischung eingesetzt werden.

Erfindungswesentlich ist es, dass bei der Berechnung des Molverhältnisses von Beschleuniger zu Schwefel in die Gesamtmolmenge Schwefel sowohl der als elementarer Schwefel zugegebene Schwefel als auch der Schwefel aus schwefelspendenden Substanzen eingeht. Der elementare Schwefel, auch als freier Schwefel bezeichnet, wird der Kautschukmischung üblicherweise als Pulver oder Granulat zugegeben.

Schwefelspendende Substanzen, enthaltend Vernetzungsmittel, die Schwefel an das Netzwerk abgeben, sind der fachkundigen Person bekannt oder z. B. in Hofmann & Gupta: Handbuch der Kautschuktechnologie, Gupta-Verlag (2001), Kapitel 7, beschrieben. Schwefelspendende Substanzen werden auch als Schwefeldonoren oder Schwefelspender bezeichnet.

Die schwefelspendende Substanz ist dabei bevorzugt ausgewählt aus der Gruppe enthaltend z.B. Thiuramdisulfide , wie z.B. Tetrabenzylthiuramdisulfid (TBzTD) und/oder Tetramethylthiuramdisulfid (TMTD) und/oder Tetramethylthiurammonosulfid (TMTM) und/oder Tetraethylthiuramdisulfid (TETD), und/oder Thiuramtetrasulfide, wie z.B. Dipentamethylenthiuramtetrasulfid (DPTT), und/oder Dithiophosphate, wie z.B. DipDis (Bis-(Diisopropyl)thiophosphoryldisulfid) und/oder Bis(0,0-2-ethylhexylthiophosphoryl)Polysulfid (z. B. Rhenocure SDT 50®, Rheinchemie GmbH) und/oder Zinkdichloryldithiophosphat (z. B. Rhenocure ZDT/S®, Rheinchemie GmbH) und/oder Zinkalkyldithiophosphat, und/oder 1,6-Bis(N,N-dibenzylthiocarbamoyldithio)hexan und/oder Diarylpolysulfide und/oder Dialkylpolysulfide und/oder 3,3'-Bis(triethoxysilylpropyl)tetrasulfid (TESPT).

Die schwefelspendende Substanz kann demnach auch ein schwefelspendender Beschleuniger sein. In diesem Fall zählen 1 mol des zugegebenen Beschleunigers in dem Molverhältnis von Beschleuniger zu Schwefel als 1 mol Beschleuniger und x mol Schwefel, wobei x die Molmenge an Schwefelatomen darstellt, die 1 mol des schwefelspendenden Beschleunigers während der Vulkanisation abgeben.
Es ist dem Fachmann bekannt, dass z.B. TBzTD zwei Schwefelatome abgibt, die an der Vulkanisation teilnehmen. Mit TBzTD als schwefelspendendem Beschleuniger ist es in einer schwefelarmen Kautschukmischung (sehr geringe Mengen, < 0,3 phr, an zugesetzten elementarem/freiem Schwefel) oder in einer Kautschukmischung ohne zugesetzten freien Schwefel möglich ein überwiegend monosulfidisches Netzwerk, also ein effizientes Netzwerk bei der Vulkanisation einzustellen.

Wenn die Kautschukmischung ein oder mehrere sulfidische Silane enthält, so gehen nur diese bei der Berechnung des Molverhältnisses von Beschleuniger zu Schwefel in die Gesamtmolmenge Schwefel ein, die Schwefelatome abgeben können. So zählt das disulfidische Silane TESPD (3,3'-Bis(triethoxysilylpropyl)disulfid) im Rahmen der Erfindung nicht als schwefelspendende Substanz, die in die Berechnung des Molverhältnisses von Beschleuniger zu Schwefel eingeht. Das tetrasulfidische Silan TESPT (3,3'-Bis(triethoxysilylpropyl)tetrasulfid) gibt, wie dem Fachmann bekannt, zwei Schwefelatome ab und geht daher in die Berechnung des Molverhältnisses ein.

Um das angestrebte Molverhältnis von Beschleuniger zu Schwefel des effizienten Vulkanisationssystems von 0,9 bis 5 in der erfindungsgemäßen Kautschukmischung zu erhalten, liegt die zugegebene Menge an Beschleuniger zwischen 2 und 10 phr und die Menge an elementarem Schwefel zwischen 0,3 und 1 phr, bevorzugt 0,4 bis 0,8 phr, besonders bevorzugt 0,5 bis 0,75 phr.
Wenn mehr als ein Beschleuniger in der Kautschukmischung enthalten ist, gehen alle zugegebenen Beschleuniger als Beschleuniger in das Molverhältnis von Beschleuniger zu Schwefel ein, und die Summe aller Mengen der zugegebenen Beschleuniger liegt zwischen 2 und 10 phr.

Bevorzugt ist es, wenn das Vulkanisationssystem einen Guanidinbeschleuniger und einen weiteren Beschleuniger und elementaren Schwefel enthält. Dabei liegen die addierten Mengen des Guanidinbeschleunigers und des weiteren Beschleunigers zwischen 2 und 10 phr, bevorzugt zwischen 3 und 9 phr, besonders bevorzugt zwischen 4 und 9 phr. Besonders bevorzugt ist es dabei, wenn das Vulkanisationssystem 0 bis 3 phr, wenigstens aber 0,1 phr DPG (Diphenylguanidin) und 4 bis 7 phr des weiteren Beschleunigers enthält. In einer bevorzugten Ausführungsform handelt es sich bei dem weiteren Beschleuniger um CBS (N-Cyclohexyl-2-benzothiazolsufenamid).

In einer bevorzugten Ausführungsform enthält das Vulkanisationssystem 1,5 bis 2,5 phr DPG und 5 bis 7 phr CBS und 0,4 bis 0,8 phr elementaren Schwefel. In einer besonders bevorzugten Ausführungsform enthält das Vulkanisationssystem 1,5 bis 2,5 phr DPG und 5 bis 7 phr CBS und 0,5 bis 0,75 phr elementaren Schwefel.

Die Kautschukmischung kann als Füllstoffe Ruß und/oder Kieselsäure in üblichen Mengen enthalten. Sie kann außerdem noch andere Füllstoffe, wie beispielsweise Alumosilicate, Kreide, Stärke, Magnesiumoxid, Titandioxid oder Kautschukgele enthalten.

Die eingesetzten Ruße weisen bevorzugt folgende Charakteristika auf: DBP-Zahl (gemäß ASTM D 2414) 90 bis 200 ml/100 g, CTAB-Zahl (gemäß ASTM D 3765) 80 bis 170 m²/g und Iodadsorptionszahl (gemäß ASTM D 1510) 10 bis 250 g/kg.

Bei den Kieselsäuren kann es sich um die dem Fachmann bekannten Kieselsäuren, die als Füllstoff für Reifenkautschukmischungen geeignet sind, handeln. Besonders bevorzugt ist es allerdings, wenn eine fein verteilte, gefällte Kieselsäure verwendet wird, die eine Stickstoff-Oberfläche (BET-Oberfläche) (gemäß DIN ISO 9277 und DIN 66132) von 35 bis 350 m²/g, bevorzugt von 35 bis 260 m²/g, besonders bevorzugt von 100 bis 260 m²/g und ganz besonders bevorzugt von 150 bis 220 m²/g und eine CTAB-Oberfläche (gemäß ASTM D 3765) von 30 bis 350 m²/g, bevorzugt von 30 bis 250 m²/g, besonders bevorzugt von 100 bis 250 m²/g und ganz besonders bevorzugt von 140 bis 210 m²/g aufweist.

Derartige Kieselsäuren führen z. B. in Kautschukmischungen für Reifenlaufstreifen zu besonders guten physikalischen Eigenschaften der Vulkanisate. Außerdem können sich Vorteile in der Mischungsverarbeitung durch eine Verringerung der Mischzeit bei gleichbleibenden Produkteigenschaften ergeben, die zu einer verbesserten Produktivität führen. Als Kieselsäuren können somit z. B. sowohl jene des Typs Ultrasil® VN3 (Handelsname) der Firma Evonik als auch hoch dispergierbare Kieselsäuren, so genannte HD-Kieselsäuren (z.B. Zeosil® 1165 MP der Firma Rhodia), zum Einsatz kommen.

Zur Verbesserung der Verarbeitbarkeit und zur Anbindung der Kieselsäure und anderer ggf. vorhandener polarer Füllstoffe an den Dienkautschuk können Silan-Kupplungsagenzien in Kautschukmischungen eingesetzt werden. Als Silan-Kupplungsagenzien können dabei alle dem Fachmann für die Verwendung in Kautschukmischungen bekannten Silan-Kupplungsagenzien verwendet werden. Dies können z.B. 3,3'-Bis(triethoxysilylpropyl)polysulfide mit 2 bis 8 Schwefelatomen, wie z.B. 3,3'-Bis(triethoxysilylpropyl)tetrasulfid (TESPT), das entsprechende Disulfid (TESPD) oder auch Silan-Gemische aus den Sulfiden mit 1 bis 8 Schwefelatomen mit unterschiedlichen Gehalten an den verschiedenen Sulfiden, sein. TESPT kann dabei beispielsweise auch als Gemisch mit Industrieruß (Handelsname X50S der Firma Evonik) zugesetzt werden. Bevorzugt wird ein Silan-Gemisch eingesetzt, welches zu 40 bis 100 Gew.-% Disulfide, besonders bevorzugt 55 bis 85 Gew.-% Disulfide und ganz besonders bevorzugt 60 bis 80 Gew.-% Disulfide enthält. Ein solches Gemisch ist z.B. unter dem Handelsnamen Si 261® der Firma Evonik erhältlich, welches z.B. in der DE 102006004062 A1 beschrieben ist.
Da dieses Gemisch überwiegend disulfidische Silane (S2-Silane) enthält, geht nur der Anteil der darin enthaltenen schwefelspendenden Silane (S3- und S4-Silane) in die oben beschriebene Berechnung des Molverhältnisses von Beschleuniger zu Schwefel ein. Ausgehend davon, dass ein S3-Silan ein Schwefelatom abgibt und ein S4-Silan 2 Schwefelatome abgibt, gehen diese Schwefelatome in die Berechnung des Molverhältnisses von Beschleuniger zu Schwefel ein.

Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT in verschiedenen Varianten von der Firma Momentive, USA, oder solche, die unter dem Namen VP Si 363® von der Firma Evonik Industries vertrieben werden.

Die Silan-Kupplungsagenzien werden in Mengen von 0,2 bis 30 phf, bevorzugt 1 bis 15 phf, besonders bevorzugt 1 bis 10 phf eingesetzt, da dann eine optimale Anbindung des Füllstoffes an den oder die Kautschuke erfolgen kann. Die Angabe phf bezieht sich auf 100 Gewichtsteile Füllstoff (parts per hundred parts of filler by weight).

Des Weiteren kann die erfindungsgemäße Kautschukmischung übliche Zusatzstoffe in üblichen Gewichtsteilen enthalten. Zu diesen Zusatzstoffen zählen
a) Alterungsschutzmittel, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ), b) Aktivatoren, wie z. B. Fettsäuren (z. B. Stearinsäure), c) Wachse, d) Harze und e) Mastikationshilfsmittel, wie z. B. 2,2'-Dibenzamidodiphenyldisulfid (DBD).

Die Kautschukmischung kann außerdem Weichmacher enthalten. Hierzu gehören alle dem Fachmann bekannten Weichmacher wie aromatische, naphthenische oder paraffinische Mineralölweichmacher, wie z.B. MES (mild extraction solvate) oder TDAE (treated distillate aromatic extract), oder Rubber-to-Liquid-Öle (RTL) oder Biomass-to-Liquid-Öle (BTL) oder Weichmacherharze oder Faktisse oder Flüssig-Polymere (wie Flüssig-BR), deren mittleres Molekulargewicht (Bestimmung per GPC = gel permeation chromatography in Anlehnung an BS ISO 11344:2004) zwischen 500 und 25000 g/mol liegt.

Werden in der erfindungsgemäßen Kautschukmischung Flüssig-Polymere als Weichmacher eingesetzt, so gehen diese nicht als Kautschuk in die Berechnung der Zusammensetzung der Polymermatrix ein.
Bevorzugt handelt es sich bei dem Weichmacher um TDAE. Es ist im Rahmen dieser Erfindung auch denkbar, dass ein Gemisch der genannten Weichmacher eingesetzt wird. Die Menge an diesen Weichmachern beträgt 0 bis 70 phr, bevorzugt 0 bis 60 phr, wenigstens aber 0,1 phr. Besonders bevorzugt werden 0,1 bis 50 phr Weichmacher eingesetzt. Sehr gute Ergebnisse hinsichtlich der Abriebeigenschaften sowie der sonstigen Mischungseigenschaften zeigen sich, wenn die Kautschukmischung 30 bis 40 phr Weichmacher enthält.

Der Erfindung liegt weiterhin die Aufgabe zugrunde einen Fahrzeugluftreifen bereitzustellen, der in wenigstens einem Bauteil die erfindungsgemäße Kautschukmischung enthält. Bevorzugt handelt es sich bei dem Bauteil um einen Laufstreifen. Die Kautschukmischung kann aber auch in anderen Bauteilen eines Fahrzeugluftreifens, wie der Seitenwand und/oder in den inneren Bauteilen, den sogenannten Body-Bauteilen, zum Einsatz kommen.

Die Herstellung der erfindungsgemäßen Kautschukmischung erfolgt auf herkömmliche Art und Weise, wobei zunächst in der Regel eine Grundmischung, die sämtliche Bestandteile mit Ausnahme des Vulkanisationssystems (elementarer Schwefel, ggf. schwefelspendende Substanzen, Beschleuniger sowie ggf. Vulkanisationsverzögerer) enthält, in ein oder mehreren Mischstufen hergestellt wird und im Anschluss durch Zugabe des Vulkanisationssystems die Fertigmischung erzeugt wird.
Anschließend wird die Mischung weiterverarbeitet, z. B. durch einen Extrusionsvorgang, und in die entsprechende Form gebracht. Bevorzugt wird die Mischung in die Form eines Laufstreifens gebracht. Ein so erzeugter Laufstreifenmischungsrohling wird bei der Herstellung des Reifenrohlings, insbesondere Fahrzeugluftreifenrohlings, wie bekannt, aufgelegt. Der Laufstreifen kann aber auch auf einen Reifenrohling, der bereits alle Reifenteile bis auf den Laufstreifen enthält, in Form eines schmalen Kautschukmischungsstreifens aufgewickelt werden.

Die Kautschukmischung ist weiterhin zur Herstellung von technischen Kautschukartikeln wie z.B. Transportbändern, Riemen, Gurten, Schläuchen, Drucktüchern, Luftfedern oder Dämpfungselementen geeignet.

Die Erfindung soll nun anhand von Vergleichs- und Ausführungsbeispielen, die in den Tabellen 1 bis 3 zusammengefasst sind, näher erläutert werden.
Die Vergleichsmischungen sind mit V, die erfindungsgemäßen Mischungen sind mit E gekennzeichnet.
In die Berechnung des Molverhältnisses gehen wie oben beschrieben beide Beschleuniger ein sowie elementarer Schwefel und der Schwefel aus den schwefelspendenden Silanen, die mit den in der DE 102006004062 A1 beschrieben Anteilen im verwendeten Silan-Gemisch Si 261® vorhanden sind. Hierbei wurde angenommen, dass das Trisulfid, welches zu 14,7 Gew.-% im Gemisch vorhanden ist, ein Schwefelatom pro Molekül Trisulfid abgibt und das Tetrasulfid, welches zu 1,8 Gew.-% im Gemisch vorhanden ist, zwei Schwefelatome pro Molekül Tetrasulfid abgibt. Das Monosulfid und das Disulfid geben bei dieser Annahme keine Schwefelatome ab. Das mittlere Molekulargewicht des Silan-Gemisches wurde aus den in der DE 102006004062 A1 angegebenen Anteilen ermittelt.

Die Mischungsherstellung erfolgte unter üblichen Bedingungen in zwei Stufen in einem Labortangentialmischer. Aus sämtlichen Mischungen wurden Prüfkörper durch optimale Vulkanisation unter Druck bei 160 °C hergestellt und mit diesen Prüfkörpern für die Kautschukindustrie typische Materialeigenschaften mit den im Folgenden angegebenen Testverfahren ermittelt.
- Umsatzzeiten von 10% Umsatz (t₁₀ Anvulkanisationszeit) und 90% Umsatz (t₉₀, Ausvulkanisationszeit) mittels rotorlosem Vulkameter (MDR = Moving Disc Rheometer) gemäß DIN 53 529
- Shore A Härte bei Raumtemperatur (RT) und 70 °C gemäß DIN ISO 7619-1
- Rückprallelastizitäten bei Raumtemperatur (RT) und 70 °C gemäß DIN 53 512
- Zugfestigkeit, Bruchdehnung und Spannungswert bei 300 % statischer Dehnung (Modul 300 %) bei Raumtemperatur gemäß DIN 53 504
- Abrieb bei Raumtemperatur gemäß DIN/ISO 4649

**Tabelle 1**

| **Bestandteile** | **Einheit** | **V (1)** | **V (2)** | **V (3)** | **E (1)** |
|---|---|---|---|---|---|
| NR ^{a)} | phr | 10 | 10 | 10 | 10 |
| BR ^{b)} | phr | 18 | 18 | 18 | 18 |
| SSBR ^{c)} | phr | 72 | 72 | 72 | 72 |
| Weichmacher ^{d)} | phr | 35 | 35 | 35 | 35 |
| Kieselsäure ^{e)} | phr | 95 | 95 | 95 | 95 |
| Alterungsschutzmittel | phr | 2 | 2 | 2 | 2 |
| Wachs | phr | 2 | 2 | 2 | 2 |
| ZnO ^{f)} | phr | 2,5 | 0 | 2,5 | 0 |
| Stearinsäure | phr | 2,5 | 2,5 | 2,5 | 2,5 |
| Silan ^{g)} | phf | 7,2 | 7,2 | 7,2 | 7,2 |
| DPG | phr | 2 | 2 | 2 | 2 |
| Sulfenamidbeschleuniger ^{h)} | phr | 2 | 2 | 5,77 | 5,77 |
| Elementarer Schwefel | phr | 2 | 2 | 0,64 | 0,64 |
| Molverhältnis Beschl./S | | 0,26 | 0,26 | 1,4 | 1,4 |

| **Eigenschaften** | | | | | |
|---|---|---|---|---|---|
| t₁₀ | min | 3,5 | 1,5 | 6,55 | 2,82 |
| t₉₀ | min | 16,7 | 11,0 | 17,0 | 12,3 |
| Shore A Härte bei RT | Shore A | 71 | 75 | 69 | 69 |
| Shore A Härte bei 70 °C | Shore A | 67 | 72 | 66 | 64 |
| Rückprallelastizität bei RT | % | 25 | 25 | 26 | 26 |
| Rückprallelastizität bei 70 °C | % | 48 | 48 | 48 | 44 |
| Zugfestigkeit | MPa | 15 | 15 | 14 | 14 |
| Bruchdehnung bei RT | % | 415 | 350 | 407 | 468 |
| Abrieb | mm³ | 150 | 156 | 130 | 79 |

| | | | | | |
|---|---|---|---|---|---|
| ^{a)} NR: TSR ^{b)} BR: BUNA® CB 25, Fa. Lanxess ^{c)} SSBR: Sprintan®SLR-4601, Styron Deutschland GmbH ^{d)} Weichmacher: TDAE ^{e)} Kieselsäure: Ultrasil® VN3 GR/HD, Evonik Industries AG ^{f)} Zinkoxid (ZnO): ZnO Rotsiegel Gran, Grillo ZnO GmbH ^{g)} Silan: Si261®, Evonik Industries AG ^{h)} Sulfenamidbeschleuniger: CBS | | | | | |

**Tabelle 2**

| **Bestandteile** | **Einheit** | **V (4)** | **E (2)** | **V (5)** | **V (6)** | **E (3)** | **V (7)** |
|---|---|---|---|---|---|---|---|
| NR ^{a)} | phr | 100 | 100 | 100 | - | - | - |
| Polyisopren, synthet. ^{b)} | phr | - | - | - | 100 | 100 | 100 |
| Weichmacher ^{c)} | phr | 35 | 35 | 35 | 35 | 35 | 35 |
| Kieselsäure ^{d)} | phr | 95 | 95 | 95 | 95 | 95 | 95 |
| Alterungsschutzmittel | phr | 2 | 2 | 2 | 2 | 2 | 2 |
| Wachs | phr | 2 | 2 | 2 | 2 | 2 | 2 |
| ZnO ^{e)} | phr | 2,5 | 1 | 0,5 | 2,5 | 1 | 0,5 |
| Stearinsäure | phr | 2,5 | 2,5 | 2,5 | 2,5 | 2,5 | 2,5 |
| Silan ^{f)} | phf | 7,2 | 7,2 | 7,2 | 7,2 | 7,2 | 7,2 |
| DPG | phr | 2 | 2 | 2 | 2 | 2 | 2 |
| Sulfenamidbeschl. ^{g)} | phr | 6,4 | 6,4 | 6,4 | 6,4 | 6,4 | 6,4 |
| Elementarer Schwefel | phr | 0,64 | 0,64 | 0,64 | 0,64 | 0,64 | 0,64 |
| Molverhältnis Beschl./S | | 1,5 | 1,5 | 1,5 | 1,5 | 1,5 | 1,5 |

| **Eigenschaften** | | | | | | | |
|---|---|---|---|---|---|---|---|
| t₉₀ | min | 8,1 | 5,6 | 4,5 | 8,7 | 6,5 | 6,0 |
| Shore Härte bei RT | Shore A | 75 | 73 | 69 | 72 | 70 | 69 |
| Shore Härte bei 70 °C | Shore A | 70 | 68 | 62 | 68 | 64 | 62 |
| Rückprallelast. bei RT | % | 34 | 31 | 31 | 36 | 34 | 32 |
| Rückprallelast. bei 70 °C | % | 49 | 47 | 45 | 52 | 50 | 47 |
| Zugfestigkeit | MPa | 20 | 20 | 18 | 21 | 20 | 19 |
| Bruchdehnung bei RT | % | 447 | 489 | 548 | 527 | 544 | 588 |
| Modul 300 % | MPa | 14 | 13 | 10 | 12 | 11 | 9 |
| Abrieb | mm³ | 129 | 119 | 150 | 86 | 79 | 91 |

| | | | | | | | |
|---|---|---|---|---|---|---|---|
| ^{a)} NR: TSR ^{b)} Polyisopren: SKI -3 LV, NizhnekamskNeftekhim Inc. ^{c)} Weichmacher: TDAE ^{d)} Kieselsäure: Ultrasil® VN3 GR/HD, Evonik Industries AG ^{e)} Zinkoxid (ZnO): ZnO Rotsiegel Gran, Grillo ZnO GmbH ^{f)} Silan: Si261®, Evonik Industries AG ^{g)} Sulfenamidbeschleuniger: CBS | | | | | | | |

**Tabelle 3**

| **Bestandteile** | **Einheit** | **V (8)** | **E (4)** | **E (5)** | **V (9)** | **E (6)** | **E (7)** |
|---|---|---|---|---|---|---|---|
| NR ^{a)} | phr | 50 | 50 | 50 | 70 | 70 | 70 |
| SSBR ^{b)} | phr | 50 | 50 | 50 | 30 | 30 | 30 |
| Weichmacher ^{c)} | phr | 35 | 35 | 35 | 35 | 35 | 35 |
| Kieselsäure ^{d)} | phr | 95 | 95 | 95 | 95 | 95 | 95 |
| Alterungsschutzmittel | phr | 2 | 2 | 2 | 2 | 2 | 2 |
| Wachs | phr | 2 | 2 | 2 | 2 | 2 | 2 |
| ZnO ^{e)} | phr | 2,5 | 1 | 0,5 | 2,5 | 1 | 0,5 |
| Stearinsäure | phr | 2,5 | 2,5 | 2,5 | 2,5 | 2,5 | 2,5 |
| Silan ^{f)} | phf | 7,2 | 7,2 | 7,2 | 7,2 | 7,2 | 7,2 |
| DPG | phr | 2 | 2 | 2 | 2 | 2 | 2 |
| Sulfenamidbeschl. ^{g)} | phr | 6,4 | 6,4 | 6,4 | 6,4 | 6,4 | 6,4 |
| Elementarer Schwefel | phr | 0,64 | 0,64 | 0,64 | 0,64 | 0,64 | 0,64 |
| Molverhältnis Beschl./S | | 1,5 | 1,5 | 1,5 | 1,5 | 1,5 | 1,5 |

| **Eigenschaften** | | | | | | | |
|---|---|---|---|---|---|---|---|
| t₁₀ | min | 3,5 | 3,4 | 2,9 | 4,3 | 3,2 | 2,8 |
| t₉₀ | min | 11,1 | 8,2 | 7,5 | 9,5 | 7,1 | 6,7 |
| Shore Härte bei RT | Shore A | 72 | 71 | 70 | 72 | 72 | 71 |
| Shore Härte bei 70 °C | Shore A | 68 | 66 | 65 | 67 | 67 | 65 |
| Rückprallelast. bei RT | % | 24 | 24 | 23 | 28 | 28 | 27 |
| Rückprallelast. bei 70 °C | % | 46 | 45 | 44 | 48 | 46 | 44 |
| Zugfestigkeit | MPa | 16 | 18 | 17 | 17 | 18 | 17 |
| Bruchdehnung bei RT | % | 417 | 498 | 534 | 438 | 480 | 512 |
| Modul 300 % | MPa | 11,8 | 10,6 | 9,4 | 12,1 | 11,5 | 9,7 |
| Abrieb | mm³ | 79 | 70 | 71 | 81 | 75 | 77 |

| | | | | | | | |
|---|---|---|---|---|---|---|---|
| ^{a)} NR: TSR ^{b)} SSBR: Sprintan®SLR-4601, Styron Deutschland GmbH ^{c)} Weichmacher: TDAE ^{d)} Kieselsäure: Ultrasil® VN3 GR/HD, Evonik Industries AG ^{e)} Zinkoxid (ZnO): ZnO Rotsiegel Gran, Grillo ZnO GmbH ^{f)} Silan: Si261®, Evonik Industries AG ^{g)} Sulfenamidbeschleuniger: CBS | | | | | | | |

Aus der Tabelle 1 wird ersichtlich, dass die Einzelmaßnahme der Zinkoxid-Reduzierung (vgl. V (1) mit V (2)) zu einem schlechteren Abriebverhalten führt, was an dem erhöhten Materialabtrag zu erkennen ist. Das Vernetzungssystem mit hohem Beschleuniger/ Schwefel-Verhältnis (V (1) vs. V (3)) zeigt hingegen ein verbessertes Abriebverhalten.

Überraschenderweise erreicht man mit der erfindungsgemäßen Kautschukmischung E (1) eine deutliche Verringerung des Abriebs und damit eine deutliche bessere Abrieb-Performance. Gleichzeitig wird der Nachteil der langsamen Heizzeiten des effizienten Vernetzungssystems (s. V (3)) durch die Reduzierung des ZnO-Gehalts ausgeglichen. Die t₉₀ Zeit von E (1) ist gegenüber denen von V(1) und V(3) derart abgesunken, dass eine Kostenersparnis erzielt und/oder ein Überheizen anderer Bauteile bei der Reifenproduktion vermieden werden kann.
Des Weiteren ist durch eine vergleichsweise (vgl. E (1) vs. V (2)) hohe t₁₀-Zeit der E(1) eine gute und sichere Prozessierbarkeit der Mischung gewährleistet, da eine zu niedrige t₁₀-Zeit zu einem Vorvulkanisieren während der Verarbeitung führen kann, was auch als "Scorch" bezeichnet wird.

Aus der Tabelle 2 wird ersichtlich, dass die Kautschukmischung E (2) mit 100 phr natürlichem Polyisopren, dem effizienten Vulkanisationssystem und 1 phr Zinkoxid vergleichsweise gute Abriebergebnisse aufweist, während die Vergleichsmischungen mit 2,5 phr Zinkoxid (V (4)) und 0,5 phr (V (5)) jeweils mehr Abrieb, also eine geringere Abriebresistenz aufweisen. Auch die erfindungsgemäße Kautschukmischung E (3) mit 100 phr synthetischem Polyisopren und 1 phr ZnO zeigt überraschend gute Abriebergebnisse im Vergleich zu den Mischungen V (6) und V (7).
Gleichzeitig sind die sonstigen Vulkanisateigenschaften der Kautschukmischungen E (2) und E (3) auf einem guten Niveau, während die Heizzeiten t₉₀ eine Kostenersparnis gegenüber den Mischungen mit 2,5 phr ZnO darstellen.

Aus Tabelle 3 geht hervor, dass in einer Kautschukmischung mit einem Polymerverschnitt von Naturkautschuk (natürliches Polyisopren) und lösungspolymerisiertem Styrol-Butadien-Kautschuk (SSBR) und dem effizienten Vernetzungssystem die Reduzierung der Zinkoxidmenge zu einer Verbesserung der Abriebbeständigkeit bei guten Vulkanisateigenschaften führt. Gleichzeitig werden die Heizzeiten t₁₀ und t₉₀ verringert. Dabei wird t₉₀ derart stark verringert, dass durch eine Verringerung der Ausheizzeit eine Kostenersparnis möglich ist, während t₁₀ auf einem Niveau verbleibt, welches keine Scorch-Anfälligkeit der Mischung hervorruft.

## Patentansprüche

1. Kautschukmischung enthaltend:
- wenigstens einen Dienkautschuk und
- 0 bis 1,2 phr Zinkoxid und
- ein Vulkanisationssystem, das wenigstens einen Beschleuniger und elementaren Schwefel und/oder wenigstens eine schwefelspendende Substanz enthält, wobei das Molverhältnis von Beschleuniger zu Schwefel 0,9 bis 5 beträgt, wobei die Gesamtmolmenge Schwefel aus elementarem Schwefel und dem von den schwefelspendenden Substanzen abgegebenem Schwefel besteht,
wobei der Beschleuniger ausgewählt ist aus der Gruppe bestehend aus Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Guanidinbeschleunigern und/oder Xanthogenatbeschleunigern, und wobei die zugegebene Menge an Beschleuniger zwischen 2 und 10 phr und die Menge an elementarem Schwefel zwischen 0,3 und 1 phr liegt.

2. Kautschukmischung nach Anspruch 1, **dadurch gekennzeichnet, dass** die schwefelspendende Substanz ausgewählt ist aus der Gruppe enthaltend z.B. Thiuramdisulfide , wie z.B. Tetrabenzylthiuramdisulfid (TBzTD) und/oder Tetramethylthiuramdisulfid (TMTD) und/oder Tetramethylthiurammonosulfid (TMTM) und/oder Tetraethylthiuramdisulfid (TETD), und/oder Thiuramtetrasulfide, wie z.B. Dipentamethylenthiuramtetrasulfid (DPTT), und/oder Dithiophosphate, wie z.B. DipDis (Bis-(Diisopropyl)thiophosphoryldisulfid) und/oder Bis(O,O-2-ethylhexyl-thiophosphoryl)Polysulfid und/oder Zinkdichloryldithiophosphat und/oder Zinkalkyldithiophosphat, und/oder 1,6-Bis(N,N-dibenzylthiocarbamoyldithio)hexan und/oder Diarylpolysulfide und/oder Dialkylpolysulfide und/oder 3,3'-Bis(triethoxysilylpropyl)tetrasulfid (TESPT).

3. Kautschukmischung nach einem der Ansprüche 1 oder 2, **dadurch gekennzeichnet, dass** sie 5 bis 15 phr eines natürlichen und/oder synthetischen Polyisopren-Kautschuks und 10 bis 25 phr eines Polybutadien-Kautschuks und 65 bis 80 phr eines Styrol-Butadien-Kautschuks und 0 phr ZnO enthält.

4. Kautschukmischung nach einem der Ansprüche 1 oder 2, **dadurch gekennzeichnet, dass** sie 20 bis 80 phr einer natürlichen und/oder synthetischen Polyisoprens und 10 bis 60 phr eines Styrol-Butadien-Kautschuks und/oder 10 bis 60 phr eines Polybutadien-Kautschuks und 0,4 bis 1,2 phr ZnO enthält.

5. Kautschukmischung nach einem der Ansprüche 1 oder 2, **dadurch gekennzeichnet, dass** sie 100 phr eines natürlichen und/oder synthetischen Polyisoprens und 0,8 bis 1,2 phr ZnO enthält.

6. Fahrzeugluftreifen, **dadurch gekennzeichnet, dass** er wenigstens eine Kautschukmischung nach einem der Ansprüche 1 bis 5 enthält.

## Claims

1. Rubber mixture comprising:
- at least one diene rubber and
- from 0 to 1.2 phr of zinc oxide and
- a vulcanization system which comprises at least one accelerator and elemental sulphur and/or at least one sulphur-donor substance, where the molar ratio of accelerators to sulphur is from 0.9 to 5, where the total molar quantity of sulphur is composed of elemental sulphur and of the sulphur donated by the sulphur-donor substances,
where the accelerator is selected from the group consisting of thiazole accelerators and/or mercapto accelerators and/or sulphonamide accelerators and/or thiocarbamate accelerators and/or thiuram accelerators and/or thiophosphate accelerators and/or thiourea accelerators and/or guanidine accelerators and/or xanthogenate accelerators, and where the quantity of accelerator added is from 2 to 10 phr and the quantity of elemental sulphur is from 0.3 to 1 phr.

2. Rubber mixture according to Claim 1, **characterized in that** the sulphur-donor substance is selected from the group comprising by way of example thiuram disulphides, for example tetrabenzyl thiuram disulphide (TBzTD) and/or tetramethyl thiuram disulphide (TMTD) and/or tetramethyl thiuram monosulphide (TMTM) and/or tetraethyl thiuram disulphide (TETD) and/or thiuram tetrasulphides, for example dipentamethylene thiuram tetrasulphide (DPTT), and/or dithiophosphates, for example DipDis(bis(diisopropyl)thiophosphoryl disulphide) and/or bis(O,O-2-ethylhexylthiophosphoryl) polysulphide and/or zinc dichloryldithiophosphate and/or zinc alkyldithiophosphate, and/or 1,6-bis(N,N-dibenzylthiocarbamoyldithio)hexane and/or diaryl polysulphides and/or dialkyl polysulphides and/or 3,3'-bis(triethoxysilylpropyl) tetrasulphide (TESPT).

3. Rubber mixture according to Claim 1 or 2, **characterized in that** it comprises from 5 to 15 phr of a natural and/or synthetic polyisoprene rubber and from 10 to 25 phr of a polybutadiene rubber and from 65 to 80 phr of a styrene-butadiene rubber and 0 phr of ZnO.

4. Rubber mixture according to Claim 1 or 2, **characterized in that** it comprises from 20 to 80 phr of a natural and/or synthetic polyisoprene and from 10 to 60 phr of a styrene-butadiene rubber and/or from 10 to 60 phr of a polybutadiene rubber and from 0.4 to 1.2 phr of ZnO.

5. Rubber mixture according to Claim 1 or 2, **characterized in that** it comprises 100 phr of a natural and/or synthetic polyisoprene and from 0.8 to 1.2 phr of ZnO.

6. Pneumatic tyre, **characterized in that** it comprises at least one rubber mixture according to any of Claims 1 to 5.

## Revendications

1. Mélange de caoutchouc, contenant :
- au moins un caoutchouc diénique et
- 0 à 1,2 pce d'oxyde de zinc et
- un système de vulcanisation, qui contient au moins un accélérateur et du soufre élémentaire et/ou au moins une substance donneuse de soufre, le rapport en moles entre l'accélérateur et le soufre étant de 0,9 à 5, la quantité molaire totale de soufre étant constituée par le soufre élémentaire et le soufre libéré par les substances donneuses de soufre,
l'accélérateur étant choisi dans le groupe constitué par les accélérateurs thiazole et/ou les accélérateurs mercapto et/ou les accélérateurs sulfénamide et/ou les accélérateurs thiocarbamate et/ou les accélérateurs thiuram et/ou les accélérateurs thiophosphate et/ou les accélérateurs thiourée et/ou les accélérateurs guanidine et/ou les accélérateurs xanthogénate, et la quantité d'accélérateur ajoutée étant comprise entre 2 et 10 pce et la quantité de soufre élémentaire étant comprise entre 0,3 et 1 pce.

2. Mélange de caoutchouc selon la revendication 1, **caractérisé en ce que** la substance donneuse de soufre est choisie dans le groupe contenant p. ex. les disulfures de thiuram, tels que p. ex. le disulfure de tétrabenzylthiuram (TBzTD) et/ou le disulfure de tétraméthylthiuram (TMTD) et/ou le monosulfure de tétraméthylthiuram (TMTM) et/ou le disulfure de tétraéthylthiuram (TETD) et/ou les tétrasulfures de thiuram, tels que p. ex. le tétrasulfure de dipentaméthylène-thiuram (DPTT), et/ou les dithiophosphates, tels que p. ex. le DipDis (disulfure de bis-(diisopropyl)thiophosphoryle) et/ou le polysulfure de bis(O,O-2-éthylhexylthiophosphoryle) et/ou le dithiophosphate de dichloryle de zinc et/ou le dithiophosphate d'alkyle de zinc et/ou le 1,6-bis(N,N-dibenzylthiocarbamoyldithio)hexane et/ou les polysulfures de diaryle et/ou les polysulfures de dialkyle et/ou le tétrasulfure de 3,3'-bis(triéthoxysilylpropyle) (TESPT).

3. Mélange de caoutchouc selon l'une quelconque des revendications 1 ou 2, **caractérisé en ce qu'**il contient 5 à 15 pce d'un caoutchouc de polyisoprène naturel et/ou synthétique et 10 à 25 pce d'un caoutchouc de polybutadiène et 65 à 80 pce d'un caoutchouc de styrène-butadiène et 0 pce de ZnO.

4. Mélange de caoutchouc selon l'une quelconque des revendications 1 ou 2, **caractérisé en ce qu'**il contient 20 à 80 pce d'un polyisoprène naturel et/ou synthétique et 10 à 60 pce d'un caoutchouc de styrène-butadiène et/ou 10 à 60 pce d'un caoutchouc de polybutadiène et 0,4 à 1,2 pce de ZnO.

5. Mélange de caoutchouc selon l'une quelconque des revendications 1 ou 2, **caractérisé en ce qu'**il contient 100 pce d'un polyisoprène naturel et/ou synthétique et 0,8 à 1,2 pce de ZnO.

6. Pneu automobile, **caractérisé en ce qu'**il contient au moins un mélange de caoutchouc selon l'une quelconque des revendications 1 à 5.
